# EUROPEAN PATENT SPECIFICATION

(11) **EP 2 556 715 B1**
(45) Date of publication and mention of the grant of the patent: **24.12.2014**
(21) Application number: 11766000.1
(22) Date of filing: 01.04.2011
(51) Int. Cl.: H04L 5/00, H04W 72/00, H04W 48/08, H04W 88/06, H04W 28/04

(54) **Subframe based, semi-static signaling of cross-carrier control format indicator in heterogeneous networks.**
Subrahmen-basierte, semi-statische Signalisierung des Kreuzträger-Kontrollinformationsindikators in heterogenen Netzwerken.
Signalisation semi-statique au niveau de sous-trame de l'indicateur du format des informations de contrôle dans des réseaux hétérogènes.

(30) Priority: 06.04.2010 JP 2010087494
(43) Date of publication of application: 13.02.2013
(73) Proprietor: NEC Corporation, Tokyo 108-8001 (JP)
(72) Inventor: NG, Boon Loong, Mulgrave, VIC 3170 (AU)
(74) Representative: Vossius & Partner
(86) International application number: PCT/JP2011/058858
(87) International publication number: WO 2011/126100

(56) References cited:
- TEXAS INSTRUMENTS: "PDCCH Carrier Indication Field for Cross-Carrier Scheduling", 3GPP DRAFT; R1-094761, no. Jeju; 20091109, 9 November 2009 (2009-11-09), XP050389158, Jeju, Korea [retrieved on 2009-11-03]
- ZTE: "PCFICH detection error handling", 3GPP DRAFT; R1-100961, vol. RAN WG1, no. San Francisco, USA; 20100222, 16 February 2010 (2010-02-16), XP050418547, SF, USA [retrieved on 2010-02-16]
- PANASONIC: 'PCFICH in cross carrier operation' 3GPP TSG-RAN WG1 #60, R1-101248 22 February 2010, pages 1 - 5, XP050418760
- MOTOROLA: 'PCFICH in Carrier Aggregation' 3GPP TSG RAN WG1 MEETING #60, R1-101111 22 February 2010, pages 1 - 3, XP050418979
- ERICSSON ET AL.: 'On PCFICH for carrier aggregation' 3GPP TSG RAN WG1 MEETING #60, R1-100840 22 February 2010, pages 1 - 3, XP050418455

## Description

### TECHNICAL FIELD

The present invention relates to a Mobile System.

### BACKGROUND ART

A major feature to be introduced for Long Term Evolution (LTE) Rel-10 (LTE-Advanced) is carrier aggregation where two or more component carriers (CCs) are aggregated in order to support wider transmission bandwidths e.g. up to 100MHz and for spectrum aggregation (see Reference 7, below). Once a User Equipment (UE) is configured with carrier aggregation, the UE is capable of simultaneously receive or transmit on all the CCs that are aggregated. Thus, the UE may be scheduled over multiple CCs simultaneously. Further details can be found in Section 5 of Reference 7.

Carrier aggregation has also been recognized as a useful tool for managing/coordinating intercell interference for heterogeneous network deployments. For the definition of the heterogeneous deployment as well as the detailed description of the inter-cell interference issue for the heterogeneous deployment, please see Section 9A of Reference 7, below.

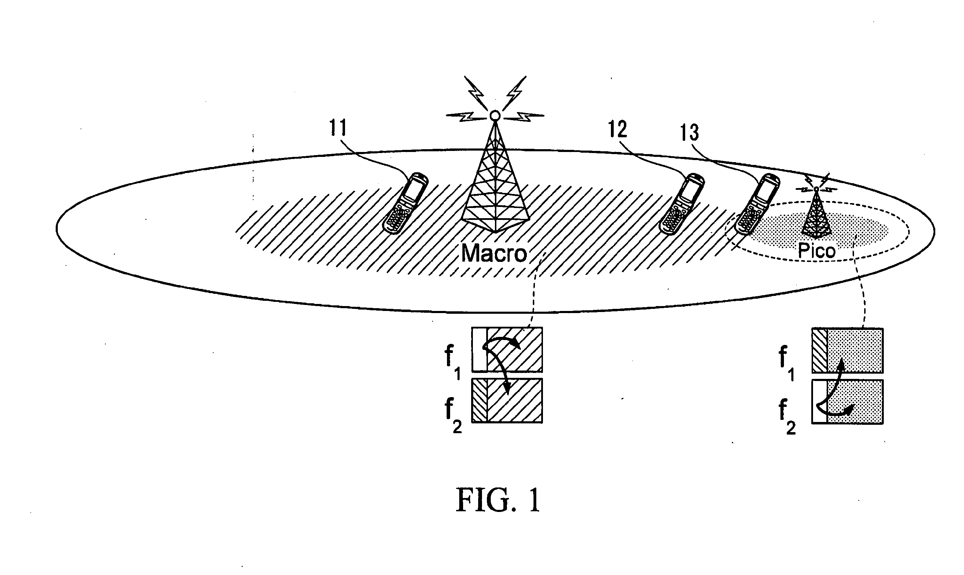

With reference to FIG 1 which shows one example of carrier aggregation applies to heterogeneous deployments, a macro UE 11 uses a control signaling on f₁ and/or f₂, and data on f₁ and/or f₂. A macro UE 12 uses a control signaling on f₁, and data on f₁ and/or f₂. A pico UE 13 uses a control signaling on f₂, and data on f₁ and/or f₂. Carrier aggregation, together with cross-carrier scheduling using Carrier Indicator Field (CIF) (see Section 5.2 of Reference 7) "provides means for coordination of the control channel interference between cell layers" by "partitioning CCs in each cell layer into two sets, one set used for data and control and one set used mainly for data and possibly control signaling with reduced transmission power" (see Section 9A.2.1 of Reference 7 for more details).

An open issue in 3rd Generation Partnership Project (3GPP) for LTE Rel-10 at the time of writing is the design of Control Format Indicator (CFI) signaling when cross-carrier scheduling is configured. In R1-100835 (see Reference 8, below), it has been agreed that:
"In case of cross carrier scheduling, a standardized solution will be supported to provide CFI to the UE for the carriers on which PDSCH is assigned. Details are FFS."

The reason for the need for a standardized solution to support providing CFI values to define starting positions of Physical Downlink Shared Channel (PDSCH) on a cross-CC scheduled CC is as follows:
1. The control region of a subframe for the cross-CC scheduled CC may not be reliable for Physical Control Format Indicator Channel (PCFICH), Physical Downlink, Control Channel (PDCCH) and Physical Hybrid ARQ Indicator Channel (PHICH) reception by the UE. Indeed, this is the motivation for cross-carrier scheduling with CIF; and
2. If the span of the control region or the start of data region on the cross-CC scheduled CC cannot be reliably detected from PCFICH, other means of providing the CFI information is needed so that the UE can reliably receive its assigned PDSCH on the cross-CC scheduled CC.

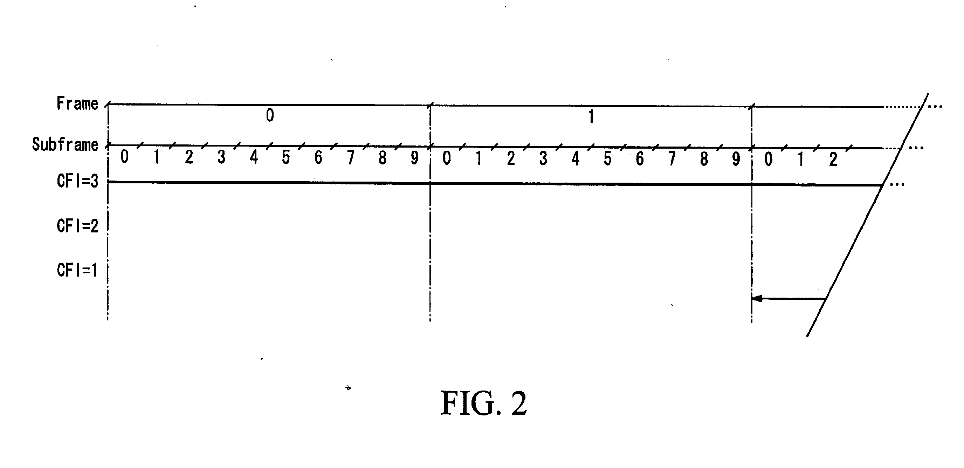

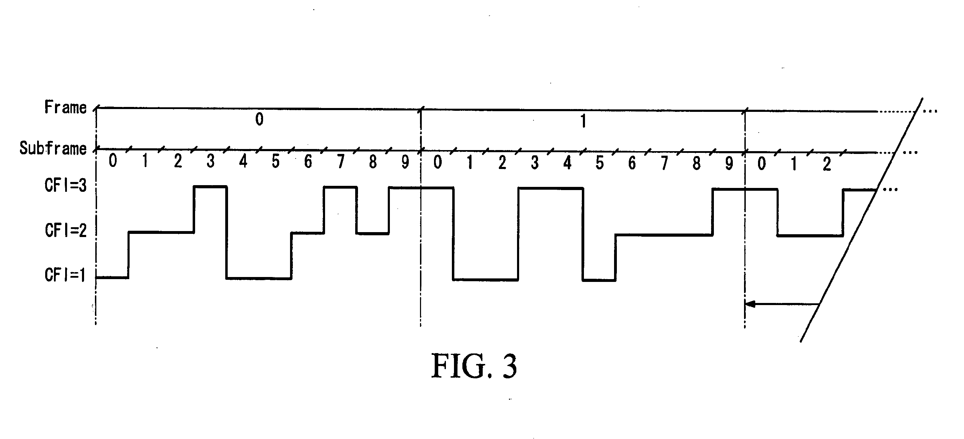

A summary of existing proposals for a standardized solution by other companies in 3GPP Radio Access Network (RAN)1 is given below:
- Semi-static Radio Resource Control (RRC) signaling: Semi-static signaling of CFI was already proposed but not agreed by a number of companies in Rel-8 for single carrier operation. This solution would exclude dynamic changes of the PDSCH starting position on a cross-CC scheduled but has a relatively low signaling cost (see Reference 4 and Reference 5, below) as shown in FIG 2;
- Downlink Control Indicator (DCI) Signaling: This solution would allow dynamic changes of the PDSCH starting position on a Cross-CC scheduled CC. The cost is additional 2 or 1 or 0 bits in the DCI with CIF depending if and which favor of CIF + CFI joint coding is selected (see Reference 2 and Reference 3, below) as shown in FIG 3; and
- The UE may assume the same CFI on the PDSCH CC as the one on the PDCCH CC: This solution does not incur any signaling overhead, but in case the CFIs on PDCCH and PDSCH CCs are not the same there are some unused or punctured PDSCH Resource Elements (Res) (see Reference 9, below).

The above-mentioned solutions have been discussed in ZTE: "PCFICH detection error handling", 3GPP DRAFT; R1-100961, vol. RAN WG1, no. San Francisco, USA; 20100222,16 February 2010 (2010-02-16), XP050418547, SF, USA. The document gives a detailed analysis of these solutions and provides preferences.

In addition, document TEXAS INSTRUMENTS: "PDCCH Carrier Indication Field for Cross-Carrier Scheduling", 3GPP DRAFT; R1-094761, no. Jeju; 20091109, 9 November 2009 (2009-11-09), XP050389158, Jeju, Korea addresses CI signaling structure, solution to PCFICH detection error on the cross-scheduled CC, and scheduling on CCs with different bandwidth. Several proposals addressing those issues are made and discussed.

In LTE, there are two main subframe types, namely the normal (or non-Multicast/Broadcast over Single Frequency Network (MBSFN)) subframe and the MBSFN subframe. The MBSFN subframe can be used to carry Physical Multicast Channel (PMCH) or Rel-10 Physical Downlink Shared Channel (PDSCH). Analyses from companies so far have typically assumed the same subframe type, i.e. the normal subframe, for all the carriers. However, configuring the same subframe type for all carriers may not be sensible for the following reasons:
1. For MBSFN subframes carrying PMCH, it may not be sensible to assume all carriers transmitting PMCH simultaneously;
2. Common MBSFN subframe configuration for all carriers means that no legacy UEs can be scheduled on any carrier for a particular time instance. This imposes severe scheduling restriction; and
3. It may be useful to have certain carrier(s) exclusive to Rel-10 UEs by disallowing Rel-8/9 UEs from camping on certain carriers. For example, in the heterogeneous deployment, if a carrier is experiencing from high interference, it may be beneficial to forbid Rel8/9 UE camping. Since there is no need to serve Rel-8/9 UEs on the carrier, more subframes can be configured to be MBSFN subframes for unicast transmission for optimized Rel-10 performance.

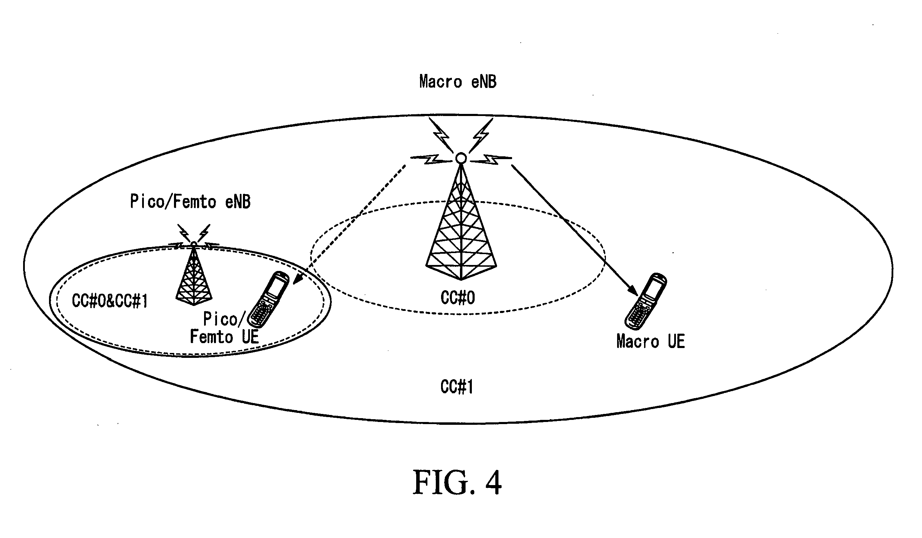

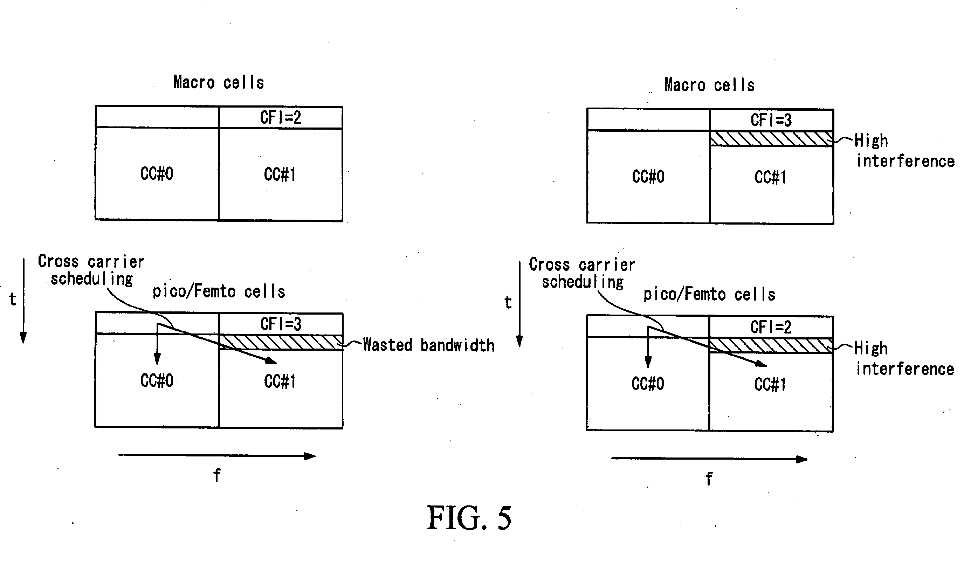

Focusing on heterogeneous network deployment with multiple carriers as shown in FIG 4, analyses e.g. in Reference 4 and Reference 5, below, show that dynamic signaling of CFI values is not required. The advantage of dynamic CFI signaling is to avoid throughput degradation caused by the inflexibility of semi-static or fixed CFI configuration. However, the effectiveness of dynamic CFI signaling is diminished by the fact that dynamic coordination of scheduling information on subframe basis among the enhanced NodeBs (eNBs) is not possible. For example, referring to FIG. 4 and FIG. 5, the start of data region by the macro eNB in carrier #1 can vary from subframe to subframe according to the load of the control channel, but such scheduling information cannot be conveyed to the pico/femto cells on a subframe basis. Any mismatch of the starting Orthogonal Frequency Division Multiplexing (OFDM) symbol for data region between the macro cell and the pico/femto cells causes either waste of bandwidth or inter-cell interference as shown in FIG 5.

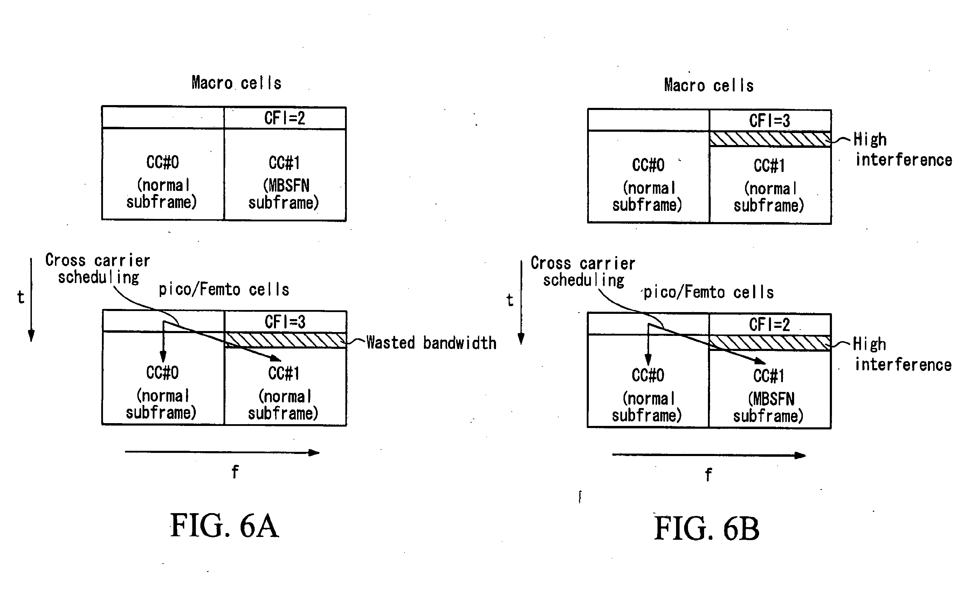

Although sharing of the dynamic scheduling information among the eNBs is not possible, the neighboring eNBs' MBSFN subframe configuration information, which only changes in a semi-static manner, can be shared via X2 interface; this is already possible in Rel-9 (see Reference 6). The implication is as follows:
1. If the subframe type of carrier #1 of the pico/femto eNB is a normal subframe but the subframe type of carrier #1 of the macro eNB is an MBSFN subframe as shown in Figure 6(a), for carrier #1 of the pico/femto eNB, the start of the data region should adapt to the MBSFN subframe configuration for carrier #1 of the macro eNB.
   a. The change of subframe type is dynamic in time; therefore, applying a fixed CFI value for a long period of time as shown in FIG 2 is inefficient.
      i. For Frequency Division Duplex (FDD), subframe 0, 4, 5 and 9 must be normal subframes whereas subframe 1, 2, 3, 6, 7 and 8 can be MBSFN subframes.
      ii. For Time Division Duplex (TDD), DL subframe 0, 1, 2, 5, and 6 are non-MBSFN subframes whereas DL subframe 3, 4, 7, 8 and 9 can be MBSFN subframes.
   b. Typically, CFI values change between 2 and 3 (all bandwidths other than 1.4MHz), or between 1 and 3 (for 1.4MHz carrier).
      i. Let's assume 6 subframes are configured as MBSFN subframes in macro carrier # 1 for a FDD system. Approximately 10.71% (12/112) resource is lost on average if CFI=3 is assumed always for 1.4MHz carrier whereas approximately 5.17% (6/116) is lost on average for all other bandwidths; and
2. If the subframe type of carrier #1 of the pico/femto eNB is an MBSFN subframe but the subframe type of carrier #1 of the macro cell is a normal subframe as shown in FIG 6B, for carrier #1 of the pico/femto eNB, the start of the data region should be 4th OFDM symbol (or 5th OFDM symbol for 1.4MHz) if a conservative approach to inter-cell interference management is adopted, assuming high load for the macro cell.
   a. This implies that the start of the data region for MBSFN subframe in Rel-10 may need to be different from the current Rel-8/9 assumption.
   b. The CFI for pico/femto carrier #1 is UE-specific in general. For example, in case Rel-8/9 UEs are still supported in the pico/femto carrier #1, or if there are other Rel-10 UEs not configured for cross-carrier scheduling e.g. if they are close to the pico/femto eNB, the CFI assumed by different UEs can be different.

The MBSFN subframe configuration of a cell, specified in System Information Block (SIB)2, can be for one frame (6 bits) or for four consecutive frames (24 bits). Therefore, the standardized solution of cross-carrier CFI signaling should be able to specify separate CFI values of each subframe of a frame or of four consecutive frames. The cross-carrier CFI value should also override any predetermined Rel-8/9 CFI value or the value signal in PCFICH in the target carrier in case the target carrier is an MBSFN subframe. This is to address the problem as explained before with reference to FIG 6B.

### [List of related art]

[Reference 1] RAN1#60 Chairman's note;
[Reference 2] R1-101206 "PCIFCH for Cross-carrier Assignment", NTT DOCOMO;
[Reference 3] R1-101248 "PCFICH in cross carrier operation", Panasonic;
[Reference 4] R1-101111 "PCFICH in Carrier Aggregation", Motorola;
[Reference 5] R1-100840 "On PCFICH for carrier aggregation", Ericsson, ST-Ericsson;
[Reference 6] R3-101161 "TS36.423 CR0341R2 Addition of MBSFN information on X2 interface", CATT, ZTE, CMCC;
[Reference 7] 3GPP TR 36.814 V2.0.0 (2010-3);
[Reference 8] R1-100835 "Way forward on PCFICH erroneous detection for Cross-Carrier Scheduling";
[Reference 9] R1-101411 "PCFICH Issues with Cross-Component Carrier Scheduling", Nokia Siemens Networks, Nokia.

### DISCLOSURE OF INVENTION

The present invention provides a semi-static RRC signaling solution that is able to signal separate CFI value for each individual subframe over a frame or over multiple frames, which the UE assumes hold until the next RRC reconfiguration event. This is in contrast with the existing semi-static signaling proposal whereby only one CFI value, selected from {1, 2, 3} or a subset thereof, is signaled by RRC (re)configuration.

It is reasonable to assume that the MBSFN subframe configuration can/should be done differently for each carrier. Furthermore, the MBSFN subframe configuration of a carrier can also be different for different neighboring eNBs (already possible in LTE Rel-8/9). The present invention addresses the issues of cross-carrier CFI signaling design taking into account the possibility of MBSFN subframes (for PMCH or for unicast transmission) being configured differently for each carrier and for each neighboring eNB.

Both dynamic DCI signaling approach and semi-static RRC signaling approach can offer feasible solutions. However, due to the semi-static nature of the MBSFN subframe configuration, semi-static RRC signaling approach is sufficient. The present invention provides the (dedicated) RRC signaling to signal separate CFI value to be assumed by the UE for each individual subframe of one frame, or of four consecutive frames.

The present invention provides a method of configuring the cross-carrier CFI such that separate CFI value can be specified for each subframe within an x number of consecutive frames. The same set of CFI values is applied by the UE for every other x consecutive frames until it is reconfigured by the eNB.

According to the present invention, the following advantages may be achieved:
1. The invention enables separate CFI value for each subframe of a frame or multiple frames to be signaled to a UE;
2. The invention can improve the bandwidth utilization of a heterogeneous network with multiple carriers;
3. The invention can provide improved inter-cell interference coordination for a heterogeneous network with multiple carriers; and
4. The invention only incurs small cost in terms of signaling to the UE.

### BRIEF DESCRIPTION OF THE DRAWINGS

FIG 1 shows a one example of carrier aggregation applies to heterogeneous deployments.
FIG 2 shows a Semi-static RRC signaling - fixed CFI value between two RRC (re)configuration.
FIG 3 shows a DCI Signaling (dynamic signaling, changing CFI value on subframe basis).
FIG 4 shows a heterogeneous network with two carriers.
FIG 5 shows a mismatched CFI between the macro carrier and pico/femto carrier.
FIG 6A shows a MBSFN subframe in macro cell and a normal subframe in pico/femto cell
FIG 6B shows a normal subframe in macro cell and a MBSFN subframe in pico/femto cell
FIG 7 shows a CFI value for each subframe which can be different according to the RRC signaling in an embodiment of the present invention.

### EMBODIMENTS FOR CARRYING OUT THE INVENTION

In the event that carrier aggregation and cross-carrier scheduling is configured by the network for the User Equipment (UE), an embodiment of the invention enables the information about the start of the data region in a subframe of a carrier (known as the Control Format Indicator (CFI)) to be delivered by the network to the UE on another carrier, without requiring the UE to receive and decode the Physical Control Format Indicator CHannel (PCFICH) on the first carrier, which can be either non-existent or unreliable for some network deployment scenarios (e.g. heterogeneous deployment). The invention achieves this by providing the means to signal separate CFI value for each subframe of a frame or multiple frames to the UE.

The embodiment of the invention can improve the bandwidth utilization of a heterogeneous deployment with multiple carriers. This can be achieved as follows. Assume the network has two cell layers with overlapping coverage with the same carrier frequency (hence interfering with each other) and each cell belongs to different eNB class as shown in FIG 4. If some subframes of the higher cell layer are configured with MBSFN subframe, the embodiment of the invention enables the CFI of the lower cell layer to adapt according to the MBSFN subframe configuration of the higher cell layer, so that OFDM resources under utilization is minimized.

The embodiment of the invention can provide improved inter-cell interference coordination capability for a heterogeneous deployment with multiple carriers. This can be achieved as follows. Assume the network has two cell layers with overlapping coverage with the same carrier frequency (hence interfering with each other) and each cell belongs to different eNB class as shown in FIG 4. If some subframes of the lower cell layer are configured with MBSFN subframe, the embodiment of the invention enables the CFI value for the MBSFN subframe in the lower cell layer to be overridden, in order to avoid the interference to the data region of the lower cell layer from the control region of the higher cell layer and also to avoid the interference to the control region of the higher cell layer from the data of the lower cell layer.

The embodiment of the invention only incurs a small cost in terms of signaling to the UE by providing the CFI information through semi-static RRC signaling.

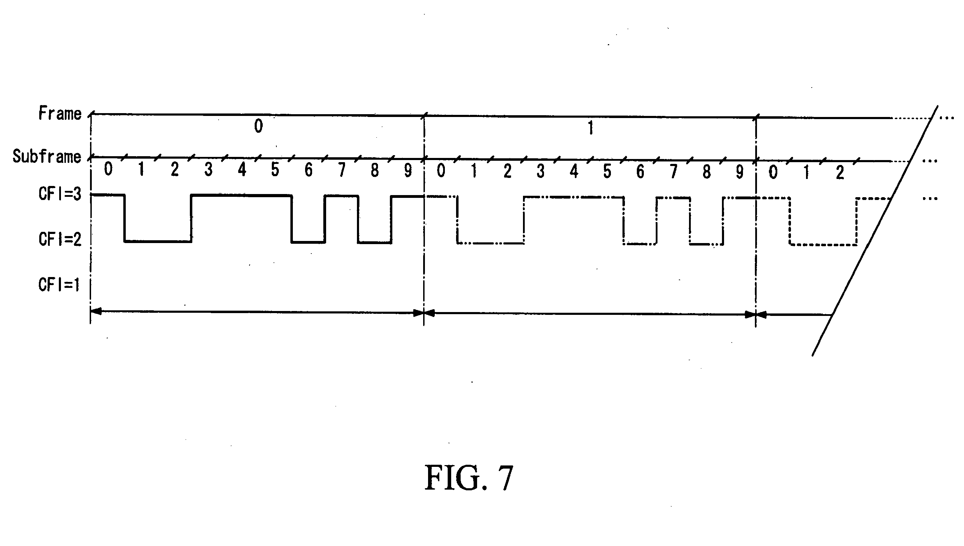

FIG 7 shows that the CFI value for each subframe can be different according to the RRC signaling. In FIG 7, the CFI pattern is repeated until it is changed by RRC reconfiguration.

The embodiment provides a (dedicated) RRC signaling that can signal separate CFI value to be assumed by the UE for each individual subframe of one frame, or of four consecutive frames. The UE assumes that the same configuration is applied until the next RRC reconfiguration event as shown in FIG 7. The aim of that is to achieve improvement in bandwidth utilization by adapting the CFI of the cross-scheduled carrier according to the MBSFN subframe configuration of the neighboring cell as shown in FIG 6A. Another aim is to achieve better inter-cell interference coordination by overriding whenever necessary the CFI for the MBSFN subframe in the cross-scheduled carrier as shown in FIG 6B.

There are many ways to design the RRC signaling. Here, we provide several examples.

### Example 1:

As there are 3 possible CFI values, 2 bits are needed to address a CFI value. There are two subframe groups, called subframe group A and subframe group B. The RRC signaling to address the CFI values for each subframe group over one frame is 2 + 1 + 6 = 9 bits, i.e. 2 bits for the CFI value for subframe group A (CFI=1, 2, 3), 1 bit for the CFI value for subframe group B (CFI=1, 2) and 6 bits to indicate which of the 6 subframes belongs to subframe group B, corresponding to subframes that can potentially be MBSFN subframes.

6 bits to indicate the subframe that belongs to subframe group B is not enough if the MBSFN subframe configuration of the interfering cell is done for 4 consecutive frames. In this case, the number of bits can be 2 + 1 + 24 = 27 bits.

### Example 2:

If signaling overhead reduction is desired, the CFI values can be limited as follows: CFI=3 and CFI=2 for subframe group A and subframe group B, respectively, since they are considered the typical values (for 1.4MHz carrier, CFI=3 and CFI=1 for subframe group A and subframe group B, respectively). In this case, only 6 bits (or 24 bits) are needed to indicate which subframes belong to subframe group B.

Note 1: The MBSFN subframe configuration is actually optional. Accordingly, if there is no MBSFN subframe configured by any eNBs, then semi-static configuration of CFI to be 1,2 or 3 for the whole time period between two RRC (re)configuration is sufficient. In this case, all subframes can be set to be subframe A in Example 1. In Example 2, the design can be modified so that we have 2 + 6 (or 24) = 8 (28) bits, i.e. 2 bits for the CFI value for subframe group A so that all three CFI values can be indicated. Note that the 6 (or 24) bits can be used to indicate all subframes as subframe group A.

### Example 3:

RRC signaling bit width can be flexible according to conditions. If only a single CFI value is enough (e.g. when there is no MBSFN subframe configured in the macro cell), then the RRC signaling can be 2 bits (CFI=1, 2, 3). Otherwise, the RRC signaling can be that given in Example 1 or Example 2.

Note 2: The RRC signaling is not required to be provided to the UE frequently. This is because the MBSFN subframe configuration or the conditions experienced by the UE in the cells (which can trigger the need for RRC reconfiguration) do not change frequently.

We provide a high level description of a possible system operation. Referring to FIG 4, the following system operation including the following [Step 1] to [Step 7] is envisioned.

### [Step 1]: heterogeneous deployment set up

Macro eNB:
1. The macro eNB has two carriers aggregated (carrier #0 and carrier #1).
   - Carrier #0 is transmitted with reduced power (small coverage).
   - Carrier #1 is transmitted with maximum power (large coverage).
2. The macro eNB sets the MBSFN subframe configuration for carrier #0 and carrier #1, which can be different.

Pico/femto eNB:
1. The pico/femto eNB has two carriers aggregated (carrier #0 and carrier #1). Both carriers are transmitted with the same power (same coverage).
2. The pico/femto eNB sets the MBSFN subframe configuration for carrier #0 and carrier #1, which can be different.

### [Step 2]: Information exchange between the macro eNB and pico/femto eNB

1. The MBSFN subframe configuration information of the eNBs for each carrier is exchanged via X2 or S1 interface.
2. The maximum CFI value to be assumed for the non-MBSFN subframes for each carrier of each eNB is exchanged via X2 or S1 interface.
3. Information exchange is initiated whenever the MBSFN subframe configuration or the maximum CFI value of a carrier of an eNB changes.

### [Step 3]: Pico/femto UE initial access and camping

1. Initial access is performed by the pico/femto UE.
2. The UE camps on the carrier #0 of the pico/femto cell. Carrier #0 is not inter-cell interference limited, so the UE can reliably receive messages from the eNB in the control region of carrier #0.

### [Step 4]: Carrier aggregation set up and cross-carrier scheduling configuration for the UE

1. Carrier #1 is configured for the pico/femto UE by the pico/femto eNB via dedicated RRC signaling on carrier #0. This sets up carrier aggregation for the UE.
2. Cross-carrier scheduling is configured for the pico/femto UE by the pico/femto eNB via dedicated RRC signaling on carrier #0. This prepares the UE for detecting the PDCCH on carrier #0 of the pico/femto eNB that assigns PDSCH on carrier #1 of the pico/femto eNB.
3. Cross-carrier CFI is configured for the pico/femto UE by the pico/femto eNB via dedicated RRC signaling on carrier #0. The RRC signaling can be Example 1, Example 2, Example 3 or others.

### [Step 5]: Carrier aggregation activation

1. Carrier #1 is activated for the pico/femto UE by the pico/femto eNB via dedicated signaling on carrier #0.
2. The UE starts to attempt to detect PDCCH with CIF on carrier #0 that schedules PDSCH on carrier #1.

### [Step 6]: Cross-carrier PDCCH transmission by the pico/femto eNB

1. The eNB transmits PDCCH with CIF on carrier #0 that assigns PDSCH on carrier #1.

### [Step 7]: Cross-carrier PDCCH reception and PDSCH reception by the pico/femto UE

1. The UE detects the PDCCH with CIF on carrier #0 and decodes the corresponding PDSCH assignment information.
2. The UE determines the start of the PDSCH OFDM symbol on carrier#1 using the CFI information obtained from Step 4, and attempts to receive and decode PDSCH accordingly.

As described above, according to the present invention, separate CFI value for each subframe over one or multiple frames is provided in the manner illustrated in FIG 7.

In the event that carrier aggregation and cross-carrier scheduling is configured by the network for the User Equipment (UE), the invention enables the information about the start of the data region in a subframe of a carrier (known as the Control Format Indicator (CFI)) to be delivered by the network to the UE on another carrier, without requiring the UE to receive and decode the Physical Control Format Indicator CHannel (PCFICH) on the first carrier, which can be non-existent or unreliable for some network deployment scenarios (e.g. heterogeneous deployment).

Thus, the invention which is defined by the scope of appended claims 1-20, provides the following advantages:
1. The invention enables separate CFI value for each subframe of a frame or multiple frames to be signaled to a UE.
2. The invention can improve the bandwidth utilization of a heterogeneous network with multiple carriers.
3. The invention can provide improved inter-cell interference coordination for a heterogeneous network with multiple carriers.
4. The invention only incurs small cost in terms of signaling to the UE.

## Claims

1. A wireless communications method implemented in a base station configured to support carrier aggregation, said method comprising:
transmitting to a user equipment a cross-carrier control format indicator, CFI, semi-statically through radio resource control, RRC, signaling such that a CFI value is specified for each subframe within a plurality of consecutive subframes of one or more frames of a component carrier,
wherein the cross-carrier control format indicator CFI comprises information about a start position of a data region in said each subframe of the component carrier, and
wherein the CFI value is applied to said each subframe until the user equipment is reconfigured by the base station.

2. The wireless communications method according to claim 1,
wherein the RRC signaling is dedicated for the user equipment.

3. The wireless communications method according to claim 1, further comprising:
performing cross-carrier scheduling for the user equipment with a carrier indicator field, CIF.

4. The wireless communications method according to claim 3,
wherein the CIF is transmitted in a Physical Downlink Control Channel, PDCCH, on the component carrier.

5. The wireless communications method according to claim 1,
wherein the user equipment assumes that the same cross-carrier control format indicator pattern is repeated for consecutive frames until the next RRC configuration.

6. A wireless communications method implemented in a user equipment configured to support carrier aggregation, said method comprising:
receiving from a base station a cross-carrier control format indicator, CFI, semi-statically through radio resource control, RRC, signaling such that a CFI value is specified for each subframe within a plurality of consecutive subframes of one or more frames of a component carrier,
wherein the cross-carrier control format indicator CFI comprises information about a start position of a data region in said each subframe of the component carrier, and
wherein the CFI value is applied to said each subframe until the user equipment = is reconfigured by the base station.

7. The wireless communications method according to claim 6,
wherein the RRC signaling is dedicated for the user equipment.

8. The wireless communications method according to claim 6,
wherein the base station performs cross-carrier scheduling for the user equipment with a carrier indicator field, CIF.

9. The wireless communications method according to claim 8,
wherein the CIF is transmitted in a Physical Downlink Control Channel, PDCCH, on the component carrier.

10. The wireless communications method according to claim 6, further comprising:
assuming that the same cross-carrier control format indicator pattern is repeated for consecutive frames until the next RRC reconfiguration.

11. A base station configured to support carrier aggregation in a wireless communications system, comprising:
a transmission means to transmit to a user equipment a cross-carrier control format indicator, CFI, semi-statically through radio resource control, RRC, signaling such that a CFI value is specified for each subframe within a plurality of consecutive subframes of one or more frames of a component carrier,
wherein the cross-carrier control format indicator CFI comprises information about a start position of a data region in said each subframe of the component carrier, and
wherein the CFI value is applied to said each subframe until the user equipment is reconfigured by the base station.

12. The base station according to claim 11,
wherein the RRC signaling is dedicated for the user equipment.

13. The base station according to claim 11,
wherein the base station performs cross-carrier scheduling for the user equipment with a carrier indicator field, CIF.

14. The base station according to claim 13,
wherein the CIF is transmitted in a Physical Downlink Control Channel, PDCCH, on the component carrier.

15. The base station according to claim 11,
wherein the user equipment assumes a plurality of cross-carrier control format indicator pattern is repeated for consecutive frames until the next RRC reconfiguration.

16. A user equipment configured to support carrier aggregation in a wireless communications system, comprising:
a receiving means to receive from a base station a cross-carrier control format indicator CFI semi-statically through radio control, RRC, signaling such that a CFI value is specified for each subframe within a plurality of consecutive subframes of one or more frames of a component carrier,
wherein the cross-carrier control format indicator CFI comprises information about a start position of a data region in said each subframe of the component carrier, and
wherein the CFI value is applied to said each subframe until the user equipment is reconfigured by the base station.

17. The user equipment according to claim 16,
wherein the RRC signaling is dedicated for the user equipment.

18. The user equipment according to claim 16,
wherein the base station performs cross-carrier scheduling for the user equipment with a carrier indicator field, CIF.

19. The user equipment according to claim 18,
wherein the CIF is transmitted in a Physical Downlink Control Channel, PDCCH, on the component carrier.

20. The user equipment according to claim 16,
wherein the user equipment assumes that the same cross-carrier control format indicator pattern is repeated until the next RRC reconfiguration.

## Patentansprüche

1. Drahtlos-Kommunikationsverfahren, das in einer Basisstation ausgeführt wird, die dafür konfiguriert ist, Träger-Aggregation zu unterstützen, wobei das Verfahren die Schritte aufweist:
semi-statisches Übertragen einer Cross-Carrier-Control-Formatanzeige, CFI, durch Radio-Resource-Control- (Funkressourcensteuerung, RRC) Signalisierung an ein Benutzerendgerät derart, dass für jeden Subrahmen von mehreren aufeinanderfolgenden Subrahmen eines oder mehrerer Rahmen einer Träger-Komponente (Component Carrier) ein CFI-Wert spezifiziert ist,
wobei die Cross-Carrier-Control-Formatanzeige, CFI, Information über eine Anfangsposition eines Datenbereichs in jedem Subrahmen der Träger-Komponente enthält, und
wobei der CFI-Wert auf jeden Subrahmen angewendet wird, bis das Benutzerendgerät durch die Basisstation neu konfiguriert ist.

2. Drahtlos-Kommunikationsverfahren nach Anspruch 1,
wobei die RRC-Signalisierung für jedes Benutzerendgerät spezifiziert ist.

3. Drahtlos-Kommunikationsverfahren nach Anspruch 1, ferner mit dem Schritt zum Ausführen einer Cross-Carrier-Zeitablaufsteuerung (Cross-Carrier-Scheduling) für das Benutzerendgerät gemäß einem Trägeranzeigefeld (Carrier Indicator Field, CIF).

4. Drahtlos-Kommunikationsverfahren nach Anspruch 3,
wobei das CIF-Feld in einem physikalischen Downlink-Steuerkanal, PDCCH, auf der Träger-Komponente übertragen wird.

5. Drahtlos-Kommunikationsverfahren nach Anspruch 1,
wobei das Benutzerendgerät voraussetzt, dass das gleiche Cross-Carrier-Control-Formatanzeigemuster sich für aufeinanderfolgende Rahmen bis zur nächsten RRC-Neukonfiguration wiederholt.

6. Drahtlos-Kommunikationsverfahren, das in einem Benutzerendgerät ausgeführt wird, das dafür konfiguriert ist, Träger-Aggregation zu unterstützen, wobei das Verfahren die Schritte aufweist:
semi-statisches Empfangen einer Cröss-Carrier-Control-Formatanzeige (Cross Carrier Control Format Indicator, CFI) durch Radio-Resource-Control-(Funkressourcensteuerung, RRC) Signalisierung von einer Basisstation derart, dass für jeden Subrahmen von mehreren aufeinanderfolgenden Subrahmen eines oder mehrerer Rahmen einer Träger-Komponente (Component Carrier) ein CFI-Wert spezifiziert ist,
wobei die Cross-Carrier-Control-Formatanzeige, CFI, Information über eine Anfangsposition eines Datenbereichs in jedem Subrahmen der Träger-Komponente enthält, und
wobei der CFI-Wert auf jeden Subrahmen angewendet wird, bis das Benutzerendgerät durch die Basisstation neu konfiguriert ist.

7. Drahtlos-Kommunikationsverfahren nach Anspruch 6,
wobei die RRC-Signalisierung für jedes Benutzerendgerät spezifiziert ist.

8. Drahtlos-Kommunikationsverfahren nach Anspruch 6,
wobei die Basisstation eine Cross-Carrier-Zeitablaufsteuerung (Cross Carrier Scheduling) für das Benutzerendgerät gemäß einem Trägeranzeigefeld (Carrier Indicator Field, CIF) ausführt.

9. Drahtlos-Kommunikationsverfahren nach Anspruch 8,
wobei das CIF-Feld in einem physikalischen Downlink-Steuerkanal, PDCCH, auf der Träger-Komponente übertragen wird.

10. Drahtlos-Kommunikationsverfahren nach Anspruch 6,
wobei vorausgesetzt wird, dass das gleiche Cross-Carrier-Control-Formatanzeigemuster sich für aufeinanderfolgende Rahmen bis zur nächsten RRC-Neukonfiguration wiederholt.

11. Basisstation, die dafür konfiguriert ist, Träger-Aggregation in einem Drahtlos-Kommunikationssystem zu unterstützen, mit:
einer Sendeeinrichtung zum semi-statischen Übertragen einer Cross-Carrier-Control-Formatanzeige (Cross Carrier Control Format Indicator, CFI) durch Radio-Resource-Control- (Funkressourcensteuerung, RRC) Signalisierung an ein Benutzerendgerät derart, dass für jeden Subrahmen von mehreren aufeinanderfolgenden Subrahmen eines oder mehrerer Rahmen einer Träger-Komponente (Component Carrier) ein CFI-Wert spezifiziert ist,
wobei die Cross-Carrier-Control-Förmatanzeige, CFI, Information über eine Anfangsposition eines Datenbereichs in jedem Subrahmen der Träger-Komponente enthält, und
wobei der CFI-Wert auf jeden Subrahmen angewendet wird, bis das Benutzerendgerät durch die Basisstation neu konfiguriert ist.

12. Basisstation nach Anspruch 11,
wobei die RRC-Signalisierung für jedes Benutzerendgerät spezifiziert ist.

13. Basisstation nach Anspruch 11,
wobei die Basisstatiön eine Cross-Carrier-Zeitablaufsteuerung (Cross Carrier Scheduling) für das Benutzerendgerät gemäß einem Trägeranzeigefeld (Carrier Indicator Field, CIF) ausführt.

14. Basisstation nach Anspruch 13,
wobei das CIF-Feld in einem physikalischen Downlink-Steuerkanal, PDCCH, auf der Träger-Komponente übertragen wird.

15. Basisstation nach Anspruch 11,
wobei das Benutzerendgerät voraussetzt, dass das gleiche Cross-Carrier-Control-Formatanzeigemuster sich für aufeinanderfolgende Rahmen bis zur nächsten RRC-Neukonfiguration wiederholt.

16. Benutzerendgerät, das dafür konfiguriert ist, Träger-Aggregation in einem Drahtlos-Kommunikationssystem zu unterstützen, mit:
einer Empfangseinrichtung zum semi-statischen Empfangen einer Cross-Carrier-Control-Formatanzeige (Cross Carrier Control Format Indicator, CFI) durch Radio-Resource-Control- (Funkressourcensteuerung, RRC) Signalisierung von einer Basisstation derart, dass für jeden Subrahmen von mehreren aufeinanderfolgenden Subrahmen eines oder mehrerer Rahmen einer Träger-Komponente (Component Carrier) ein CFI-Wert spezifiziert ist,
wobei die Cross-Carrier-Control-Formatanzeige, CFI, Information über eine Anfangsposition eines Datenbereichs in jedem Subrahmen der Träger-Komponente enthält, und
wobei der CFI-Wert auf jeden Subrahmen angewendet wird, bis das Benutzerendgerät durch die Basisstation neu konfiguriert ist.

17. Benutzerendgerät nach Anspruch 16,
wobei die RRC-Signalisierung für das Benutzerendgerät spezifiziert ist.

18. Benutzerendgerät nach Anspruch 16,
wobei die Basisstation eine Cross-Carrier-Zeitablaufsteuerung (Cross Carrier Scheduling) für das Benutzerendgerät gemäß einem Trägeranzeigefeld (Carrier Indicator Field, CIF) ausführt.

19. B enutzerendgerät nach Anspruch 18,
wobei das CIF-Feld in einem physikalischen Downlink-Steuerkanal, PDCCH, auf der Träger-Komponente übertragen wird.

20. Benutzerendgerät nach Anspruch 16,
wobei das Benutzerendgerät voraussetzt, dass das gleiche Cross-Carrier-Control-Formatanzeigemuster sich bis zur nächsten RRC-Neukonfiguration wiederholt.

## Revendications

1. Procédé de communication sans fil mis en oeuvre dans une station de base configurée de manière à prendre en charge une agrégation de porteuses, ledit procédé comprenant:
transmettre, à un équipement d'utilisateur, un indicateur de format de commande, CFI, de porteuse croisée, de manière semi-statique, à travers une signalisation de commande de ressources radio, RRC, de sorte qu'une valeur d'indicateur CFI est spécifiée pour chaque sous-trame au sein d'une pluralité de sous-trames consécutives d'une ou plusieurs trames d'une porteuse composante ;
dans lequel l'indicateur de format de commande, CFI, de porteuse croisée comporte des informations connexes à une position de début d'une zone de données dans ladite chaque sous-trame de la porteuse composante ; et
dans lequel la valeur d'indicateur CFI est appliquée à chaque dite sous-trame jusqu'à ce que l'équipement d'utilisateur soit reconfiguré par la station de base.

2. Procédé de communication sans fil selon la revendication 1,
dans lequel la signalisation de commande RRC est dédiée pour l'équipement d'utilisateur.

3. Procédé de communication sans fil selon la revendication 1, comprenant en outre l'étape ci-dessous consistant à :
mettre en oeuvre une planification de porteuse croisée pour l'équipement d'utilisateur avec un champ d'indicateur de porteuse, CIF.

4. Procédé de communication sans fil selon la revendication 3,
dans lequel le champ CIF est transmis dans un canal de commande de liaison descendante physique, PDCCH, sur la porteuse composante.

5. Procédé de communication sans fil selon la revendication 1,
dans lequel l'équipement d'utilisateur suppose que le même motif d'indicateur de format de commande de porteuse croisée est répété pour des trames consécutives jusqu'à la reconfiguration de commande RRC successive.

6. Procédé de communication sans fil mis en oeuvre dans un équipement d'utilisateur configuré de manière à prendre en charge une agrégation de porteuses, ledit procédé comprenant les étapes ci-dessous consistant à :
recevoir, en provenance d'une station de base, un indicateur de format de commande, CFI, de porteuse croisée, de manière semi-statique, à travers une signalisation de commande de ressources radio, RRC, de sorte qu'une valeur d'indicateur CFI est spécifiée pour chaque sous-trame au sein d'une pluralité de sous-trames consécutives d'une ou plusieurs trames d'une porteuse composante ;
dans lequel l'indicateur de format de commande, CFI, de porteuse croisée comporte des informations connexes à une position de début d'une zone de données dans ladite chaque sous-trame de la porteuse composante ; et
dans lequel la valeur d'indicateur CFI est appliquée à chaque dite sous-trame jusqu'à ce que l'équipement d'utilisateur soit reconfiguré par la station de base.

7. Procédé de communication sans fil selon la revendication 6,
dans lequel la signalisation de commande RRC est dédiée pour l'équipement d'utilisateur.

8. Procédé de communication sans fil selon la revendication 6,
dans lequel la station de base met en oeuvre une planification de porteuse croisée pour l'équipement d'utilisateur avec un champ d'indicateur de porteuse, CIF.

9. Procédé de communication sans fil selon la revendication 8,
dans lequel le champ CIF est transmis dans un canal de commande de liaison descendante physique, PDCCH, sur la porteuse composante.

10. Procédé de communication sans fil selon la revendication 6, comportant en outre l'étape ci-dessous consistant à :
supposer que le même motif d'indicateur de format de commande de porteuse croisée est répété pour des trames consécutives jusqu'à la reconfiguration de commande RRC successive.

11. Station de base configurée de manière à prendre en charge une agrégation de porteuses dans un système de communication sans fil, comprenant :
un moyen de transmission pour transmettre, à un équipement d'utilisateur, un indicateur de format de commande, CFI, de porteuse croisée, de manière semi-statique, à travers une signalisation de commande de ressources radio, RRC, de sorte qu'une valeur d'indicateur CFI est spécifiée pour chaque sous-trame au sein d'une pluralité de sous-trames consécutives d'une ou plusieurs trames d'une porteuse composante ;
dans laquelle l'indicateur de format de commande, CFI, de porteuse croisée comporte des informations connexes à une position de début d'une zone de données dans ladite chaque sous-trame de la porteuse composante ; et
dans laquelle la valeur d'indicateur CFI est appliquée à chaque dite sous-trame jusqu'à ce que l'équipement d'utilisateur soit reconfiguré par la station de base.

12. Station de base selon la revendication 11,
dans laquelle la signalisation de commande RRC est dédiée pour l'équipement d'utilisateur.

13. Station de base selon la revendication 11,
dans laquelle la station de base met en oeuvre une planification de porteuse croisée pour l'équipement d'utilisateur avec un champ d'indicateur de porteuse, CIF.

14. Station de base selon la revendication 13,
dans laquelle le champ CIF est transmis dans un canal de commande de liaison descendante physique, PDCCH, sur la porteuse composante.

15. Station de base selon la revendication 11,
dans laquelle l'équipement d'utilisateur suppose que le même motif d'indicateur de format de commande de porteuse croisée est répété pour des trames consécutives jusqu'à la reconfiguration de commande RRC successive.

16. Équipement d'utilisateur configuré de manière à prendre en charge une agrégation de porteuses dans un système de communication sans fil, comprenant :
un moyen de réception pour recevoir, en provenance d'une station de base, un indicateur de format de commande, CFI, de porteuse croisée, de manière semi-statique, à travers une signalisation de commande de ressources radio, RRC, de sorte qu'une valeur d'indicateur CFI est spécifiée pour chaque sous-trame au sein d'une pluralité de sous-trames consécutives d'une ou plusieurs trames d'une porteuse composante ;
dans lequel l'indicateur de format de commande, CFI, de porteuse croisée comporte des informations connexes à une position de début d'une zone de données dans ladite chaque sous-trame de la porteuse composante ; et
dans lequel la valeur d'indicateur CFI est appliquée à chaque dite sous-trame jusqu'à ce que l'équipement d'utilisateur soit reconfiguré par la station de base.

17. Équipement d'utilisateur selon la revendication 16,
dans lequel la signalisation de commande RRC est dédiée pour l'équipement d'utilisateur.

18. Équipement d'utilisateur selon la revendication 16,
dans lequel la station de base met en oeuvre une planification de porteuse croisée pour l'équipement d'utilisateur avec un champ d'indicateur de porteuse, CIF.

19. Équipement d'utilisateur selon la revendication 18,
dans lequel le champ CIF est transmis dans un canal de commande de liaison descendante physique, PDCCH, sur la porteuse composante.

20. Équipement d'utilisateur selon la revendication 16,
dans lequel l'équipement d'utilisateur suppose que le même motif d'indicateur de format de commande de porteuse croisée est répété jusqu'à la reconfiguration de commande RRC successive.
